# EUROPÄISCHE PATENTANMELDUNG

(11) **EP 2 078 994 A1**
(43) Veröffentlichungstag der Anmeldung: **15.07.2009**
(21) Anmeldenummer: 08000394.0
(22) Anmeldetag: 10.01.2008
(51) Int. Cl.: G05B 19/042, G05B 19/05, G06F 9/46

(54) **Automatisierungsgerät und Verfahren zu dessen Betrieb**

(71) Anmelder: SIEMENS AKTIENGESELLSCHAFT, 80333 München (DE)
(72) Erfinder: Rosskopf, Harald, 76327 Pfinztal-Wöschbach (DE)

(57) **Zusammenfassung**

Die Erfindung betrifft ein Automatisierungsgerät (12) mit einem in einem Speicher (22) hinterlegten oder hinterlegbaren Steuerungsprogramm (24) zur Steuerung und/oder Überwachung eines technischen Prozesses (42) und ein Verfahren zu dessen Betrieb, wobei das Steuerungsprogramm (24) als Programmelemente (26, 28, 30, 32, 34) softwaremäßige Entsprechungen von im technischen Prozess (42) befindlichen oder dem technischen Prozess zugehörigen Elementen (36, 38, 40) umfasst, wobei das Steuerungsprogramm (24) Verknüpfungen zwischen einzelnen Programmelementen (26, 28, 30, 32, 34) umfasst, wobei einzelne Verknüpfungen als Synchronisationslinie (48) eine zeitliche Koordination eines Ablaufs der durch die Synchronisationslinie (48) verknüpften Programmelemente (26, 28, 30, 32, 34) bewirken und wobei mit einer Synchronisationslinie (48) mindestens eine logische Bedingung (54) assoziierbar ist, so dass die Synchronisationslinie (44) neben einer zeitlichen Koordination des Ablaufs der durch die Synchronisationslinie (48) verknüpften Programmelemente (26, 28, 30, 32, 34) auch eine von der oder jeder Bedingung (54) abhängige Koordination bewirkt.

## Beschreibung

Die Erfindung betrifft ein Automatisierungsgerät zur Steuerung und/oder Überwachung eines technischen Prozesses gemäß dem Oberbegriff des Anspruchs 1 sowie ein Verfahren zum Betrieb eines solchen Automatisierungsgeräts nach Anspruch 2.

Derartige Automatisierungsgeräte sind an sich bekannt. Als Automatisierungsgerät bezeichnet man unter anderem auch speicherprogrammierbare Steuerungen, die zur Steuerung und Kontrolle von Produktionsprozessen eingesetzt werden können. In Anlagen mit Rezeptursteuerungssystemen werden Rezepte zur Produktion eines bestimmten Produkts oder Produkttyps ausgeführt. Diese Rezepte werden oft nebenläufig, z. B. in zwei Teilanlagen, ausgeführt und müssen synchronisiert werden, wenn ihre Produktionsprozesse voneinander abhängig sind und zu demselben Zeitpunkt beendet werden müssen. Um diese Synchronisation zu gewährleisten, müssen zur Formulierung der Rezepte geeignete Kontrollstrukturen zur Verfügung stehen, wobei es von großem Nutzen ist, wenn der Produktionsablauf direkt sichtbar ist. In der SFC-Norm (SFC = Sequential Functional Chart) gibt es so genannte Transitionen, an denen explizite Bedingungen für das Weiterlaufen der Produktion projektiert werden können, so dass beispielsweise ein Prozess an einer bestimmten Stelle angehalten wird und auf einen anderen Prozess wartet, bevor ein nächster gestartet wird. Die Bedingungen können sehr flexibel und wirkungsvoll formuliert werden, so dass viele Anwenderwünsche erfüllt werden können. Jedoch können Details der Prozesse, die in den Rezeptursteuerungssystemen ausgeführt werden, nur in einem so genannten ToolTip, also in einem kleinen Fenster in einer graphischen Benutzeroberfläche, das dem Benutzer weitere Informationen zu einem Objekt anzeigt, in Textform oder in einem Eigenschaftsdialog als Tabelle angezeigt werden. In einer das Rezept darstellenden Rezeptgraphik erkennt man die projektierten Bezüge dagegen nicht.

Mit einem unter der Bezeichnung SIMATIC BATCH bekannten Softwarepaket der Anmelderin lassen sich Prozesse, die nacheinander abgearbeitet werden müssen, flexibel automatisieren. Hierbei steht als Kontrollstruktur eine Synchronisationslinie zur Verfügung, die den Zeitpunkt der Synchronisation graphisch durch Ausrichtung der abhängigen Programmelemente anzeigt. Die Verwendung einer Synchronisationslinie bewirkt eine zeitliche Synchronisation der Ausführung der der Synchronisationslinie nachfolgenden, also "ausgangseitigen" Programmelemente.

Der Erfindung liegt die Aufgabe zugrunde, ein Automatisierungsgerät und ein Verfahren zu dessen Betrieb anzugeben, welches geeignet ist, eine Flexibilität bei der Definition von Kontrollstrukturen zu erhöhen.

Diese Aufgabe wird erfindungsgemäß mit den Merkmalen der Ansprüche 1 und 2 gelöst. Dazu ist bei einem Automatisierungsgerät mit einem in einem Speicher hinterlegten oder hinterlegbaren Steuerungsprogramm zur Steuerung und/oder Überwachung eines technischen Prozesses, wobei das Steuerungsprogramm als Programmelemente softwaremäßige Entsprechungen von im technischen Prozess befindlichen oder dem technischen Prozess zugehörigen Elementen umfasst, wobei das Steuerungsprogramm Verknüpfungen zwischen einzelnen Programmelementen umfasst und wobei einzelne Verknüpfungen als Synchronisationslinie eine zeitliche Koordination eines Ablaufs der durch die Synchronisationslinie verknüpften Programmelemente bewirken, vorgesehen, dass mit einer Synchronisationslinie zumindest eine logische Bedingung assoziierbar ist, derart, dass die Synchronisationslinie neben einer zeitlichen Koordination des Ablaufs der durch die Synchronisationslinie verknüpften Programmelemente auch eine von der oder jeder Bedingung abhängige Koordination bewirkt. Entsprechend ist für das Verfahren zum Betrieb eines Automatisierungssystems mit einem in einem Speicher hinterlegten oder hinterlegbaren Steuerungsprogramm, wobei mittels einer Synchronisationslinie auf einer Eingangsseite zumindest zwei Programmelemente und auf einer Ausgangsseite zumindest ein Programmelement verknüpft sind, derart, dass zur zeitlichen Koordination des Ablaufs der verknüpften Programmelemente das oder jedes ausgangsseitige Programmelement erst dann zum Ablauf kommt, wenn ein Ablauf jedes eingangsseitigen Programmelements abgeschlossen ist, vorgesehen, dass im Falle einer mit einer Bedingung assoziierten Synchronisationslinie zunächst die zeitliche Koordination des Ablaufs der durch die Synchronisationslinie verknüpften eingangsseitigen Programmelemente bewirkt und die Bedingung erst ausgewertet wird, wenn der Ablauf jedes eingangsseitigen Programmelements abgeschlossen ist.

Der Vorteil der Erfindung besteht darin, dass die Synchronisationslinie neben einer zeitlichen Koordination des Ablaufs der durch die Synchronisationslinie verknüpften Programmelemente auch eine von der oder jeder Bedingung abhängige Koordination bewirkt. Die oder jede Bedingung wird erst ausgewertet, wenn der Ablauf jedes eingangsseitigen Programmelementes beendet ist, so dass sichergestellt ist, dass die ausgangsseitigen Programmelemente nur ablaufen, wenn die mit der Synchronisationslinie assoziierte Bedingung erfüllt ist.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Wenn bei dem Verfahren zum Betrieb des Automatisierungsgerätes eine mit einer Bedingung assoziierte Synchronisationslinie in einer zur Visualisierung des Steuerungsprogramms durch das Automatisierungssystem generierten und/oder angezeigten graphischen Darstellung auf einem Ausgabegerät mit einer graphischen Hervorhebung angezeigt wird, fällt diese dem Anwender schneller innerhalb der graphischen Darstellung des Steuerungsprogramms auf, so dass der Ablauf des Steuerungsprogramms leichter zu verfolgen ist und das Erfüllen der Bedingung überprüft werden kann.

Wird als graphische Hervorhebung der mit einer Bedingung assoziierten Synchronisationslinie eine vorgegebene oder vorgebbare Farbe verwendet, kann der Anwender beispielsweise wichtige Stellen im Ablauf des Steuerungsprogramms durch die Verwendung einer entsprechenden Farbe gezielt kennzeichnen.

Wenn im Falle einer Erfüllung der mit der Synchronisationslinie assoziierten Bedingung ein Farbumschlag zu einer anderen vorgegebenen oder vorgebbaren Farbe erfolgt, ermöglicht dies dem Anwender, schneller zu erfassen, ob eine Bedingung schon erfüllt wurde oder noch nicht.

Wenn im Falle einer eine Mehrzahl von Einzelbedingungen umfassenden Bedingung eine auf eine Anzahl erfüllter Einzelbedingungen abgestellte graphische Hervorhebung angezeigt wird, kann sich der Anwender leichter einen Überblick über den Fortschritt des Ablaufs des Steuerungsprogramms an der entsprechenden Synchronisationslinie verschaffen.

Die Erfindung bezieht sich auch auf ein Computerprogramm mit durch einen Computer ausführbaren Programmcodeanweisungen zur Implementierung des erfindungsgemäßen Verfahrens sowie ggf. dessen Ausgestaltungen und auf ein Computerprogrammprodukt mit einem durch einen Computer ausführbaren derartigen Computerprogramm.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten, Elemente und Kombinationen, die z. B. durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

### Darin zeigen

- FIG 1: ein Automatisierungsgerät zur Steuerung und/oder Überwachung eines technischen Prozesses und
- FIG 2: eine Veranschaulichung einer mit Bedingungen verknüpften Synchronisationslinie.

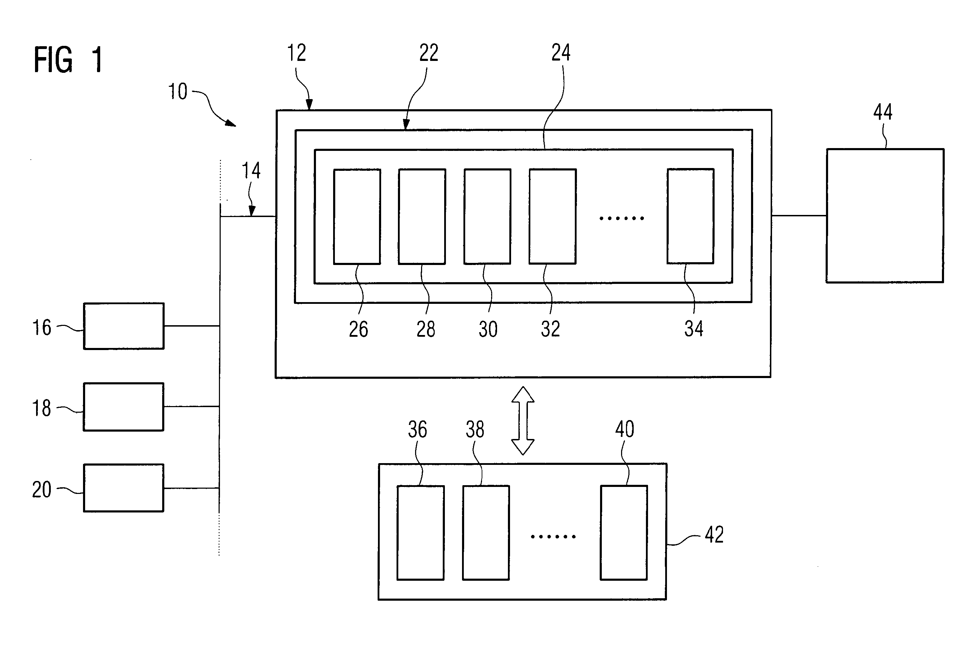

FIG 1 zeigt ein insgesamt mit 10 bezeichnetes Automatisierungssystem, das zumindest ein Automatisierungsgerät 12 umfasst und ggf. über eine kommunikative Verbindung, z. B. einen Bus 14, insbesondere einen Feldbus, mit weiteren Automatisierungsgeräten 16, 18, 20 kommunikativ verbunden ist. Das Automatisierungsgerät 12 umfasst einen Speicher 22. In diesem Speicher 22 ist ein Steuerungsprogramm 24 hinterlegt, welches Programmelemente 26, 28, 30, 32, 34 umfasst. Diese Programmelemente 26, 28, 30, 32, 34 entsprechen softwaremäßig Elementen 36, 38, 40, die sich in einem technischen Prozess 42 befinden oder zu diesem gehören. Der technische Prozess 42, hier nur schematisch vereinfacht dargestellt, wird von dem Steuerungsprogramm 24 gesteuert und/oder überwacht. Das Steuerungsprogramm 24 umfasst außerdem Verknüpfungen zwischen einzelnen Programmelementen 26, 28, 30, 32, 34. Das Steuerungsprogramm 24 und/oder Ergebnisse der Ausführung desselben können auf einem im Automatisierungssystem 10 befindlichen Ausgabegerät 44 visualisiert werden.

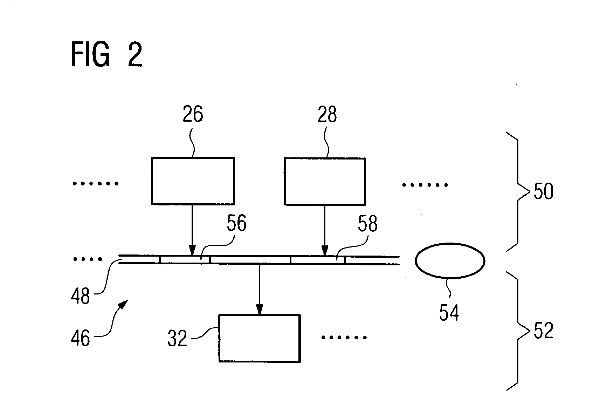

FIG 2 zeigt eine graphische Darstellung 46 des Steuerungsprogramms 24, wie sie beispielsweise von dem Ausgabegerät 44 (FIG 1) dargestellt werden kann. In dieser graphischen Darstellung 46 sind einer Synchronisationslinie 48 als Beispiel für eine zwischen Programmelementen 26-34 bestehende Verknüpfung drei Programmelemente 26, 28, 32 zugeordnet. Die Synchronisationslinie 48 bewirkt eine zeitliche Koordination der verknüpften Programmelemente 26, 28, 32. Wie dargestellt, sind mindestens zwei Programmelemente 26, 28 einer Eingangsseite 50 und mindestens ein Programmelement einer Ausgangsseite 52 der Synchronisationslinie 48 zugeordnet. Dies bewirkt, dass das auf der Ausgangsseite 52 befindliche Programmelement 32 erst dann zur Ausführung gelangt, wenn die Ausführung jedes eingangsseitigen Programmelements 26, 28 abgeschlossen ist. Dies ist die im Stand der Technik bekannte zeitliche Synchronisation der durch eine Synchronisationslinie 48 verknüpften Programmelemente 26-34.

Gemäß der Erfindung ist vorgesehen, dass mit der Synchronisationslinie 48 mindestens eine logische Bedingung oder mehrere Einzelbedingungen 54, die durch übliche logische Verknüpfungen wie UND und ODER und dergleichen miteinander kombiniert sind, assoziiert sind, die ausgewertet wird oder werden, wenn alle eingangsseitigen Programmelemente 26, 28 abgelaufen sind, die Synchronisationslinie 48 also erreicht haben. Erst wenn die oder jede Bedingung 54 erfüllt ist, wird das hier als einziges dargestellte ausgangsseitige Programmelement 32 gestartet.

Einer mit einer oder mehreren logischen Bedingungen 54 verknüpften Synchronisationslinie 48 kann eine Farbe zugeordnet werden, die dann in der graphischen Darstellung 46 erkennbar ist. Diese Farbe kann vom Anwender frei gewählt werden. Ebenso ist es möglich, dass bei Erfüllung einer logischen Bedingung 54 ein Farbumschlag erfolgt und in einer ebenfalls vorgebbaren Farbe dargestellt werden kann. Werden mehrere Einzelbedingungen 54 an einzelnen Anschlusspunkten 56, 58 der eingangsseitigen Programmelemente 26, 28 mit der Synchronisationslinie 48 assoziiert, können diese Anschlusspunkte 56, 58 auch einzeln eingefärbt werden.

Damit lässt sich die Erfindung kurz wie folgt darstellen:
Die Erfindung betrifft ein Automatisierungsgerät 12 mit einem in einem Speicher 22 hinterlegten oder hinterlegbaren Steuerungsprogramm 24 zur Steuerung und/oder Überwachung eines technischen Prozesses 42 und ein Verfahren zu dessen Betrieb, wobei das Steuerungsprogramm 24 als Programmelemente 26-34 softwaremäßige Entsprechungen von im technischen Prozess 42 befindlichen oder dem technischen Prozess zugehörigen Elementen 36-40 umfasst, wobei das Steuerungsprogramm 24 Verknüpfungen zwischen einzelnen Programmelementen 26-34 umfasst, wobei einzelne Verknüpfungen als Synchronisationslinie 48 eine zeitliche Koordination eines Ablaufs der durch die Synchronisationslinie 48 verknüpften Programmelemente 26-34 bewirken und wobei mit einer Synchronisationslinie 48 mindestens eine logische Bedingung 54 assoziierbar ist, so dass die Synchronisationslinie 48 neben einer zeitlichen Koordination des Ablaufs der durch die Synchronisationslinie 48 verknüpften Programmelemente 26-34 auch eine von der oder jeder Bedingung 54 abhängige Koordination bewirkt.

## Patentansprüche

1. Automatisierungsgerät (12) mit einem in einem Speicher (22) hinterlegten oder hinterlegbaren Steuerungsprogramm (24) zur Steuerung und/oder Überwachung eines technischen Prozesses (42),
wobei das Steuerungsprogramm (24) als Programmelemente (26, 28, 30; 32, 34) softwaremäßige Entsprechungen von im technischen Prozess (42) befindlichen oder dem technischen Prozess zugehörigen Elementen (36, 38, 40) umfasst,
wobei das Steuerungsprogramm (24) Verknüpfungen zwischen einzelnen Programmelementen (26, 28, 30; 32, 34) umfasst und
wobei einzelne Verknüpfungen als Synchronisationslinie (48) eine zeitliche Koordination eines Ablaufs der durch die Synchronisationslinie (48) verknüpften Programmelemente (26, 28, 30; 32, 34) bewirken,
**dadurch gekennzeichnet,**
**dass** mit einer Synchronisationslinie (48) zumindest eine logische Bedingung (54) assoziierbar ist.

2. Verfahren zum Betrieb eines Automatisierungsgerätes (12) nach Anspruch 1, wobei mittels einer Synchronisationslinie (48) auf einer Eingangsseite (50) zumindest zwei Programmelemente (26, 28) und auf einer Ausgangsseite (52) zumindest ein Programmelement (32) verknüpft sind, derart, dass zur zeitlichen Koordination des Ablaufs der verknüpften Programmelemente (26, 28; 32) das oder jedes ausgangsseitige Programmelement (32) erst dann zum Ablauf kommt, wenn ein Ablauf jedes eingangsseitigen Programmelements abgeschlossen ist,
**dadurch gekennzeichnet,**
**dass** im Falle einer mit einer Bedingung (54) assoziierten Synchronisationslinie (48) zunächst die zeitliche Koordination des Ablaufs der durch die Synchronisationslinie (48) verknüpften Programmelemente (26, 28; 32) bewirkt und die Bedingung (54) erst ausgewertet wird, wenn der Ablauf jedes eingangsseitigen Programmelements (26, 28) abgeschlossen ist.

3. Verfahren nach Anspruch 2, wobei eine mit einer Bedingung (54) assoziierte Synchronisationslinie (48) in einer zur Visualisierung des Steuerungsprogramms (24) durch das Automatisierungssystem (10) generierten und/oder angezeigten graphischen Darstellung (46) auf einem Ausgabegerät (44) mit einer graphischen Hervorhebung angezeigt wird.

4. Verfahren nach Anspruch 3, wobei als graphische Hervorhebung eine vorgegebene oder vorgebbare Farbe verwendet wird.

5. Verfahren nach Anspruch 4, wobei im Falle einer Erfüllung der mit der Synchronisationslinie (48) assoziierten Bedingung (54) ein Farbumschlag zu einer anderen vorgegebenen oder vorgebbaren Farbe erfolgt.

6. Verfahren nach einem der Ansprüche 2 bis 4, wobei im Falle einer eine Mehrzahl von Einzelbedingungen umfassenden Bedingung (54) eine auf eine Anzahl erfüllter Einzelbedingungen (54) abgestellte graphische Hervorhebung angezeigt wird.

7. Computerprogramm mit durch einen Computer ausführbaren Programmcodeanweisungen zur Implementierung des Verfahrens nach einem der Ansprüche 2 bis 6, wenn das Computerprogramm auf einem Computer ausgeführt wird.

8. Computerprogrammprodukt, insbesondere Speichermedium, mit einem durch einen Computer ausführbaren Computerprogramm gemäß Anspruch 7.
